# EUROPEAN PATENT APPLICATION

(11) **EP 0 690 618 A1**
(43) Date of publication of application: **03.01.1996**
(21) Application number: 95304494.8
(22) Date of filing: 26.06.1995
(51) Int. Cl.: H04N 5/45

(54) **An imaging apparatus which simultaneously displays images formed in different analog formats on a single monitor**

(30) Priority: 27.06.1994 JP 143707/94; 28.06.1994 JP 145200/94
(71) Applicant: NIKON CORPORATION, Tokyo 100 (JP)
(72) Inventor: Sato, Eiichi, Asahikawa-shi, Hokkaido (JP); Suzuki, Akitoshi, Yokohama-shi, Kanagawa-ken (JP)
(74) Representative: Burke, Steven David

(57) **Abstract**

An imaging apparatus which displays a first image, formed in a first analog format and converted to digital image data representing the first image, and a second image, formed in a second analog format and converted to digital image data representing the second image, on a single monitor. The apparatus includes a frame memory which receives and stores the digital image data representing the first image, and receives and stores the digital image data representing the second image. The frame memory has specific memory locations. The frame memory stores the digital image data representing the first image into the specific memory locations of the frame memory, and stores the digital image data representing the second image in a selected portion of the specific memory locations of the frame memory. A display device has a display surface and uses the digital image data stored in the frame memory to simultaneously display the first image and the second image on the display surface. In this manner, two different images formed in two different analog formats, respectively, are simultaneously displayed on the same monitor.

## Description

### BACKGROUND OF THE INVENTION

### 1. Field of the Invention

The present invention relates to an imaging device which reproduces high clarity, high resolution image information from an HDTV camera, and reference image information from an NTSC camera, on a single monitor.

### 2. Description of the Related Art

A high definition television camera (HDTV camera) can obtain high resolution image information of a subject (such as a specimen observed from a microscope). This high resolution image information can then be used to transmit high resolution image data over a great distance to a remote location. A specialist at the remote location can use the high resolution image data to make accurate visual judgements. Reference information relating to the subject can also be sent to the remote distance. Therefore, high resolution image data of the subject and reference information relating to the subject can be visually seen at the remote location. The reference information can have a low resolution in comparison to the high resolution image data. Therefore, image data of the reference information is formed by a standard television camera (NTSC camera) in order to reduce the amount of data transmitted.

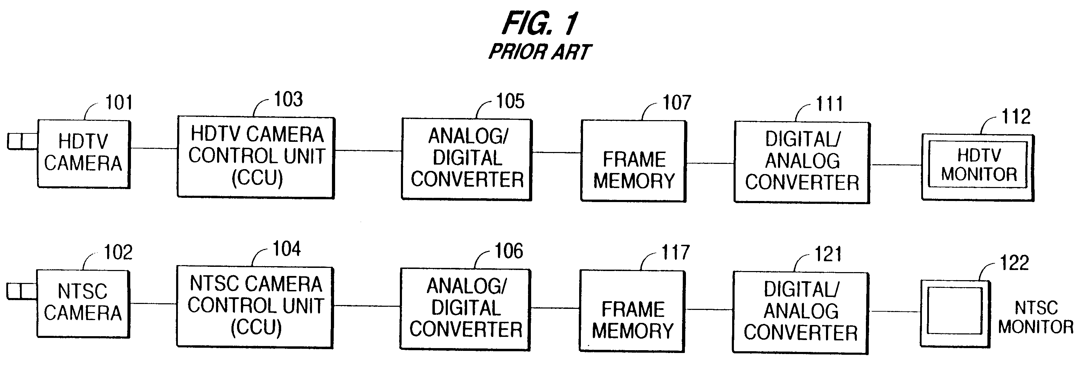

FIG. 1 illustrates a conventional HDTV-NTSC imaging system which displays two different formats on two different monitors. In FIG. 1, a conventional HDTV camera 101 forms an image of a subject. The image formed by HDTV camera 101 is provided to a conventional HDTV camera control unit (CCU) 103. HDTV camera control unit 103 converts the image into analog video signals for HDTV use. The analog video signals of HDTV camera control unit 103 are provided to a conventional analog/digital converter 105. Analog/digital converter 105 converts the analog video signals into digital image data. This digital image data is provided to, and stored in (that is, written into), a conventional frame memory 107 for HDTV use. By adjusting the timing of rewriting digital image data into frame memory 107, the digital image data is stored in frame memory 107 as, for example, stationary image information. The digital image data stored in frame memory 107 is transmitted over an appropriate remote distance to a conventional digital/analog converter 111, where the transmitted digital image data is converted into analog video signals for use by a conventional HDTV monitor 112. Images are reproduced on HDTV monitor 112 from the analog video signals. In this manner, images formed by HDTV camera 101 are viewed on remotely located HDTV monitor 112.

Similarly, an image formed by a conventional NTSC camera 102 is converted by a conventional NTSC camera control unit (CCU) 104 into analog video signals for NTSC use. The format of analog video signals from NTSC camera 2 is different from the format of analog video signals from HDTV camera 1. NTSC camera control unit 104 also performs a frame thinning out process on the image. The analog video signals from NTSC camera control unit 104 are provided to a conventional analog/digital converter 106. Analog/digital converter 106 converts the analog video signals into digital image data. The digital image data from analog/digital converter 106 is stored in a sequential frame memory 117. The digital image data of frame memory 117 is sent over a remote distance to a conventional digital/analog converter 121 where the digital image data is converted to analog video signals and then reproduced on a conventional NTSC monitor 122. Therefore, as illustrated in FIG. 1, image data formed by HDTV camera 101 is restored and displayed as an image on HDTV monitor 112, and image data formed by NTSC camera 102 is restored and displayed as an image on NTSC monitor 122.

As previously described, the format of analog video signals from NTSC camera 2 is different from the format of analog video signals from HDTV camera 1. Therefore, as illustrated by FIG. 1, a conventional HDTV-NTSC imaging system displays an image formed by an HDTV camera on an HDTV monitor, and displays an image formed by an NTSC camera on a separate NTSC monitor. Therefore, a conventional HDTV-NTSC imaging system requires two different types of monitors. This use of two different types of monitors results in increased equipment bulk, increased cost and requires a person at the remote location to view two separate monitors to see both the specific information and the reference information.

### SUMMARY OF THE INVENTION

Accordingly, it is an object of the present invention to provide an imaging system which displays image information of two different formats on a single monitor.

More particularly, it is an object of the present invention to provide an HDTV-NTSC imaging system which displays image information from an HDTV camera and image information from an NTSC camera on a single monitor at a remote location.

Objects of the present invention are achieved by providing an imaging apparatus which displays a first image and a second image. The first image is formed in a first analog format and converted to digital image data representing the first image. The second image is formed in a second analog format and converted to digital image data representing the second image. The first analog format is a different analog format than the second analog format. The apparatus includes a frame memory which receives and stores the digital image data representing the first image and the digital image data representing the second image. A display device has a display surface and uses the digital image data representing the first image and the digital image data representing the second image stored in the frame memory to simultaneously display the first image and the second image on the display surface. The frame memory has specific memory locations. The frame memory writes the digital image data representing the first image into the specific memory locations of the frame memory, and writes the digital image data representing the second image in a selected portion of the specific memory locations of the frame memory.

Objects of the present invention are also achieved by providing the imaging apparatus with an HDTV camera which produces analog images signals corresponding to the first image in the first image format. A first analog/digital converter converts the analog image signals of the HDTV camera into the digital image data representing the first image. The digital image data representing the first image is stored in the specific memory locations of the frame memory. An NTSC camera produces analog image signals corresponding to the second image in the second analog format. A second analog/digital converter converts the analog image signals of the NTSC camera into the digital image data representing the second image. The digital image data representing the second image are then stored in the portion of the specific memory locations of the frame memory. A digital/analog converter converts the digital image data representing the first image and the digital image data representing the second image stored in the frame memory into analog video signals. An HDTV monitor uses the analog video signals of the digital/analog converter to display the first image and the second image on the HDTV monitor.

Moreover, objects of the present invention are achieved by providing an imaging apparatus which includes a first frame memory and a second frame memory. The first frame memory receives and stores the digital image data representing the first image. The second frame memory receives and stores the digital image data representing the second image. A display device has a display surface and uses the digital image data stored in the first frame memory and the digital image data stored in the second frame memory to simultaneously display the first image and the second image on the display surface.

Objects of the present invention are also achieved by providing the imaging apparatus with an HDTV camera which produces analog images signals corresponding to the first image, and a first analog/digital converter which converts the analog image signals of the HDTV camera into the digital image data representing the first image. This digital image data of the first analog/digital converter is stored in the first frame memory. The imaging apparatus also includes an NTSC camera which produces analog image signals corresponding to the second image, and a second analog/digital converter which converts the analog image signals of the NTSC camera into the digital image data representing the second image. The digital image data of the second analog/digital converter are then stored in the second frame memory. A control circuit transfers the digital image data representing the second image stored in the second frame memory into the first frame memory. Further, a digital/analog converter converts the digital image data representing the first image and the digital image data representing the second image stored in the first frame memory into analog video signals. The display device is an HDTV monitor which uses the analog video signals of the digital/analog converter to display the first image and the second image on the HDTV monitor.

Further, objects of the present invention are achieved by providing an imaging apparatus which includes a first camera and a second camera which produces images in different formats. The first camera produces analog image signals corresponding to a first image in a first format. A first analog/digital converter converts the analog image signals of the first camera into digital image data representing the first image. The second camera produces analog image signals corresponding to a second image in a second format. A second analog/digital converter converts the analog image signals of the second camera into digital image data representing the second image. A control circuit is selectively operable to be in a first state or a second state. A frame memory stores the digital image data representing the first image when the control circuit is in the first state, and stores the digital image data representing the second image when the control unit is in the second state. A digital/analog converter converts the digital image data stored in the frame memory into analog video signals. A display device uses the analog video signals of the digital/analog converter to display one of the first image and the second image in accordance with the analog video signals of the digital/analog converter.

Objects of the present invention are achieved by providing an imaging apparatus which displays a first image represented by digital image data and a second image represented by digital image data. The apparatus includes a frame memory and a display device. The frame memory stores the digital image data representing the first image and the digital image data representing the second image. The display device has a display surface formed by pixels. The digital image data representing the first image includes data for displaying the first image on a number of pixels of the display device, and the digital data representing the second image includes data for displaying the second image on a number of pixel of the display device which is different than the number of pixels for displaying the first image. The display device uses the digital image data representing the first image and the digital image data representing the second image stored in the frame memory to simultaneously display the first image and the second image and the display surface.

### BRIEF DESCRIPTION OF THE DRAWINGS

These and other objects and advantages of the invention will become apparent and more readily appreciated from the following description of the preferred embodiments, taken in conjunction with the accompanying drawings of which:

FIG. 1 (Prior Art) is a block diagram of a conventional imaging system.

FIG. 2 is a block diagram of an imaging system according to an embodiment of the present invention.

FIG. 3 is a diagram illustrating the display on a monitor of an imaging system, according to an embodiment of the present invention.

FIG. 4 is a block diagram of an imaging system according to an additional embodiment of the present invention.

FIG. 5 is a diagram illustrating the display on a monitor of an imaging system, according to an embodiment of the present invention.

FIG. 6 is a block diagram of an imaging system according to further embodiment of the present invention.

FIG. 7 is a block diagram of an imaging system according to an embodiment of the present invention.

FIG. 8 is a diagram illustrating the display on a monitor of an imaging system, according to an embodiment of the present invention.

FIG. 9 is a diagram illustrating a process of writing images into a frame memory of an imaging system, according. to an embodiment of the present invention.

FIG. 10 is a block diagram illustrating an imaging system according to a further embodiment of the present invention.

### DESCRIPTION OF THE PREFERRED EMBODIMENTS

Reference will now be made in detail to the present preferred embodiments of the present invention, examples of which are illustrated in the accompanying drawings, where like reference numerals refer to like elements throughout.

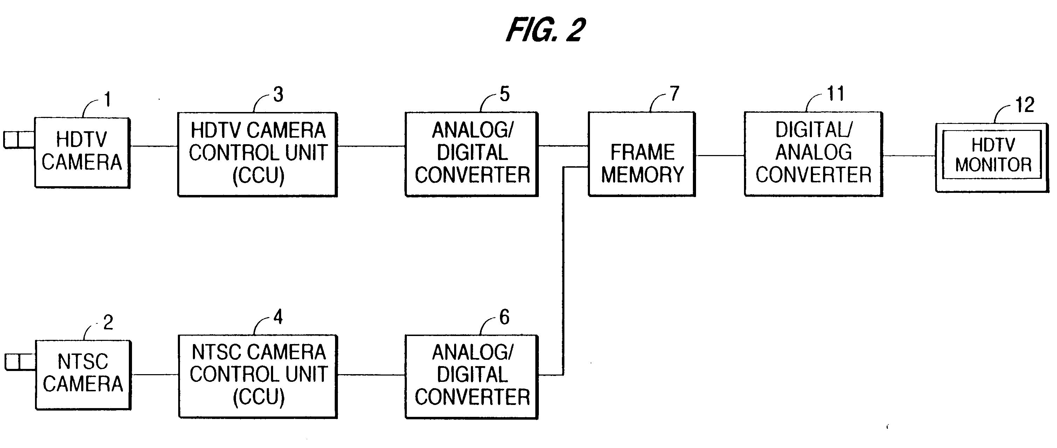

FIG. 2 is a block diagram of an imaging system according to an embodiment of the present invention. In FIG. 2, image information formed by a conventional HDTV camera 1 is provided to a conventional HDTV camera control unit (CCU) 3. HDTV camera control unit 3 controls the operation of HDTV camera 1 and converts the image signal into an analog video signal for HDTV use. The analog video signal produced by HDTV camera control unit 3 is provided to a conventional analog/digital converter 5. Analog/digital converter 5 converts the analog video signal into digital image data and provides the digital image data to a frame memory 7. The digital image data is stored in frame memory 7. Frame thinning out is performed during the writing of the digital image data into frame memory 7. That is, within the digital image data, image data of tens of frames per hundreds of frames are written into frame memory 7. Via this process, stationary image data is stored in frame memory 7. In the above manner, image information which was successively formed by HDTV camera 1 is stored in frame memory 7 as stationary image data.

Image information formed by a conventional NTSC camera 2 is provided to a conventional NTSC camera control unit (CCU) 4. NTSC camera control unit 4 controls the operation of NTSC camera 2 and, in addition, converts the image information formed by NTSC camera 2 into an analog video signal for NTSC use. This analog video signal is provided to an analog/digital converter 6. Analog/digital converter 6 converts the analog video signal into digital image data. The digital image data is then stored in frame memory 7. The writing of digital image data from analog/video converter 6 into frame memory 7 is performed during the time when digital image data from analog/digital converter 5 is not being written into frame memory 7.

Image data for HDTV use is disposed in 1,920 × 1,032 pixel addresses for storage. Namely, the stationary image of one picture comprises 1,920 × 1,032 pixels (1,920 horizontal pixels and 1,032 vertical pixels). The image data formed by HDTV camera 1 is stored successively in the addresses of the entire frame memory 7. The image data formed by NTSC camera 2 is stored within a portion of the addresses of frame memory 7. For example, image data formed by NTSC camera 2 can be stored in address locations from line number 521 to line number 1,032 (512 lines in a vertical direction from the bottom of one picture plane) from each first pixel to 512th pixel (each line 512 pixels from the left).

For frame memory 7, the addresses of regions for storing the image data formed by NTSC camera 2 are predetermined. The digital image data produced by analog/digital converter 6 is written into the predetermined address locations. In the above manner, the image data formed by HDTV camera 1 is successively stored in addresses of all of frame memory 7. The image data formed by NTSC camera 2 is stored in predetermined locations (predetermined regions) of frame memory 7. Digital image data stored in this manner in frame memory 7 is written in address sequence. Digital image data read from HDTV frame 7 is converted by a conventional digital/analog converter 11 into an analog video signal for HDTV use. Images based on this analog video signal are displayed on a conventional HDTV monitor 12.

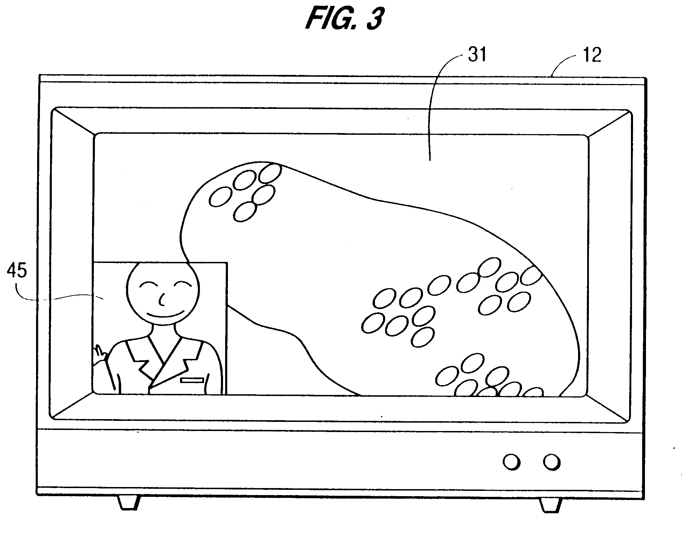

FIG. 3 is a diagram illustrating a display on HDTV monitor 12, according to an embodiment of the present invention. In FIG. 3, an image 31 formed by HDTV camera 1 is displayed on the picture surface of HDTV monitor 12. Then, an image 45 formed by NTSC camera 2 is displayed on image 31. Image 45 corresponds to image data stored by NTSC camera 2 in a predetermined region within frame memory 7. In this manner, image information formed by NTSC camera 2 can be reproduced on HDTV monitor 12, superimposed on a portion of image 31 of image information formed by HDTV camera 1. Accordingly, two types of images (images formed by HDTV camera 1 and images formed by NTSC camera 2) can be displayed on the television picture surface of a single monitor.

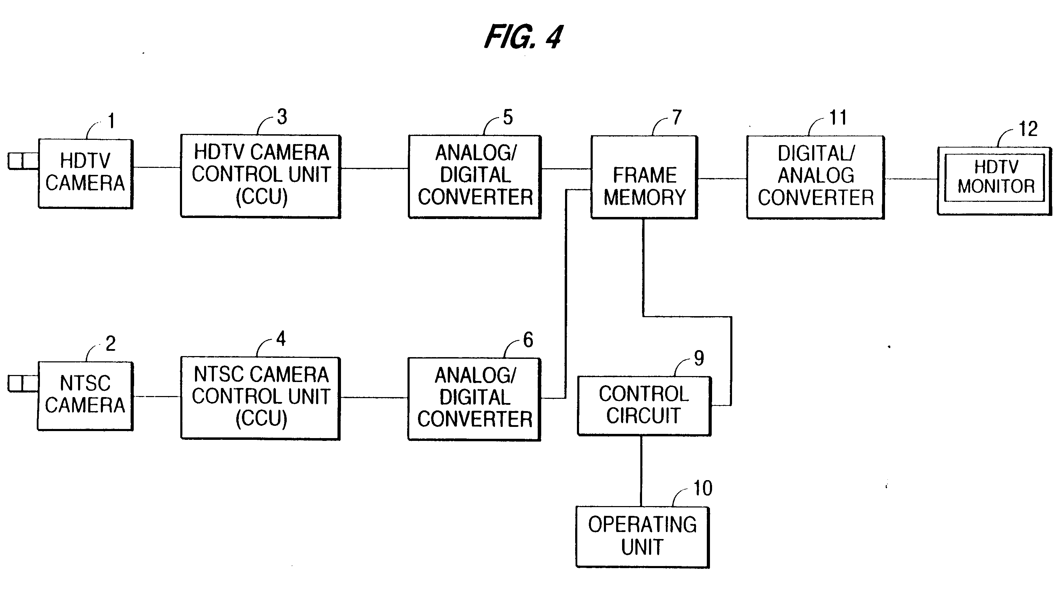

FIG. 4 is a block diagram of an imaging system according to an additional embodiment of the present invention. The imaging system illustrated in FIG. 4 is similar to the imaging system illustrated in FIG. 2, by also includes a control circuit 9 and an operating unit 10. Control circuit 9 comprises a microcomputer (not illustrated) and is connected to HDTV from memory 7. The writing of image data into frame memory 7 from analog/digital converter 5 and analog/digital converter 6 is controlled by control circuit 9 and operating unit 10.

The operating unit 10 is a switch having a first state (a normal state) and a second state. When operating unit 10 is in the first state (a normal state), control circuit 9 controls the writing into frame memory 7 of image data of one frame portion within the digital image data produced by analog/digital converter 5. When operating unit 10 is switched to the second state, control circuit 9 controls the repetitive writing of image data from analog/digital converter 6 into a predetermined region of frame memory 7. The changing of the state of operating unit 10 may be performed by a system operator or may be performed by a mechanical or electrical arrangement or process.

Therefore, by changing the switching status of operating unit 10, control can be performed of the writing into frame memory 7 of digital image data from analog/digital converter 5 and of digital image data from analog/digital converter 6. When operating unit 10 is in the first state, image data from analog/digital converter 5 is stored in the frame memory 7. As a result, images formed by HDTV camera are reproduced as stationary images on the whole surface of HDTV monitor 12. When operating unit 10 is switched to the second state via a switching operation by an operator or an electrical or mechanical arrangement or process, image data from analog/digital converter 6 is stored in frame memory 7. As a result, as shown in FIG. 3, image 45 formed by NTSC camera 2 is reproduced on a portion of HDTV monitor 12. Thus, two images (the image formed by HDTV camera 1 and the image formed by NTSC camera 2) are reproduced in combination on a single monitor.

When the image data from analog/digital converter 6 is being written into frame memory 7, it is possible to control which specific regions of frame memory 7 are written into. In FIG. 4, via the changeover of operating unit 10 to the second state, control circuit 9 writes digital image data from analog/digital converter 6 into frame memory 7. At this time, via the operation of operating unit 10, the top address of the region to be written into is able to change. For example, via the operation of operating unit 10, the top address indicates the first pixel of a suitable line for writing data from analog/digital converter 6 into frame memory 7. In this case, control circuit 9 causes the image data from analog/digital converter 6 to be successively stored in the address locations of suitably specified regions in each first pixel to 512th pixel from line number 1 to line number 512. In this manner, when the address of the first pixel location of the first line is established as the top address, the image formed by NTSC camera 2 is reproduced in a specific location on HDTV monitor 12.

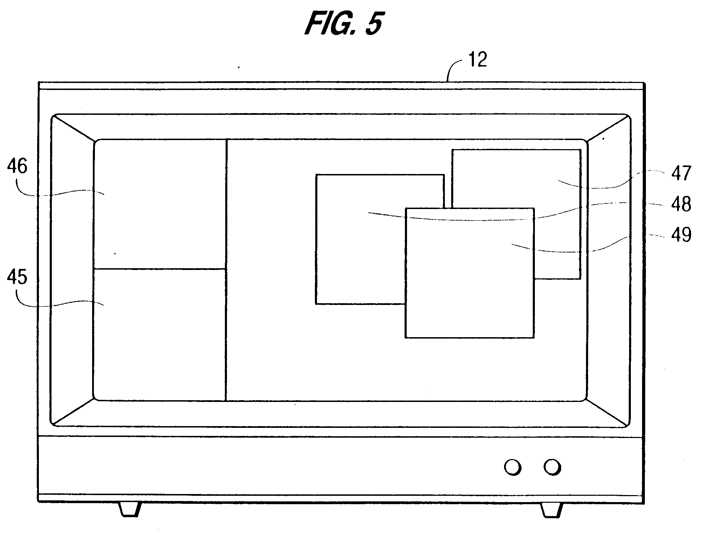

FIG. 5 is a diagram illustrating various display positions on HDTV monitor 12, according to an embodiment of the present invention. As illustrated in FIG. 5, when the address of the first pixel location of the first line is established as the top address, the image formed by NTSC camera 2 is reproduced in the specific location 46 (the left-hand top corner in FIG. 5) on HDTV monitor 12. Moreover, via the operation of operating unit 10, if the top address is indicated as the address corresponding to the number 1,409 pixel of the first line, the image formed by NTSC camera 2 is reproduced in the location 47 (the right-hand top corner in FIG. 5) of HDTV monitor 12. In this manner, in an imaging system as illustrated in FIG. 4, the location of the specified region on HDTV monitor 12 for displaying an image can be determined by an external operation performed when the image data from analog/digital converter 6 is to be stored and indicating a specified region of frame memory 7. Accordingly, as shown in FIG. 5, the image formed by NTSC camera 2 can be displayed at an optional location of HDTV monitor 12. In FIG. 5, locations 45, 46, 47, 48 and 49 represent examples of optional display locations..

Normally, the image formed by HDTV camera 1 is the most important image (for example, the most important image of a specimen viewed by a microscope) and would mostly be reproduced in the center portion of HDTV monitor 12. In this case, the image formed by NTSC camera 2 may be displayed in a corner of the picture surface of HDTV monitor 12. Even if important images formed by HDTV camera 1 are reproduced in positions outside the central portion of HDTV monitor 12, the image of reference information formed by NTSC camera 2 may be reproduced in positions on HDTV monitor 12 of comparatively low importance relative to the image formed by HDTV camera. Therefore, it is easy to see the image information of HDTV camera 1 and the associated image information of NTSC camera 2, and the two images can viewed together on HDTV monitor 12 by a specialist who can make judgments based on these images.

Therefore, according to embodiments of the present invention, the position of a specific region can be indicated by an external operation and, furthermore, the writing of image data from analog/digital converter 5 and analog/digital converter 8 into frame memory 7 can be controlled by external operations. Accordingly, the image formed by HDTV camera 1 can be reproduced as a stationary image on the whole picture surface of HDTV monitor 12 by writing only the image data from analog/digital converter 5 into frame memory 7. Furthermore, by indicating a specific region on HDTV monitor 12 and appropriately causing storage of image data from analog/digital converter 6 to be written into HDTV frame 7, the image formed by NTSC camera 2 can be reproduced, for example, in the top right-hand corner of HDTV monitor 12 and superimposed on the image formed by HDTV camera 1. In this case, the display position of the image formed by NTSC camera 2 is shown by location 47 in FIG. 5.

Moreover, according to embodiments of the present invention, different images formed by NTSC camera 2 can be simultaneously displayed in different locations on HDTV monitor 12. For example, as described above, an image formed by NTSC camera 2 can be displayed in location 47 on HDTV monitor 12. When the next image data from analog/digital converter 6 is displayed, and when it is desired to retain the display of the image formed by NTSC camera 2 in location 47, a specific region may be disposed in a separate location on HDTV monitor 12 (for example, the left-hand bottom corner of HDTV monitor 12). As a result, the digital image data of the image formed by NTSC camera 2 is written into another address location of frame memory 7. Accordingly, an image reproduced in location 47 of HDTV monitor 12 remains as a stationary image and a new image formed by NTSC camera is displayed at location 45 on HDTV monitor 12 on top of the stationary image formed by HDTV camera 1.

According to embodiments of the present invention as illustrated by FIG. 5, frame memory 7 has specific memory locations. Frame memory 7 writes the digital image data representing a first image (for example, an HDTV image) into the specific memory locations of the frame memory, and writes digital image data representing a second image (for example, an NTSC image) in a selected portion of the specific memory locations of frame memory 7.

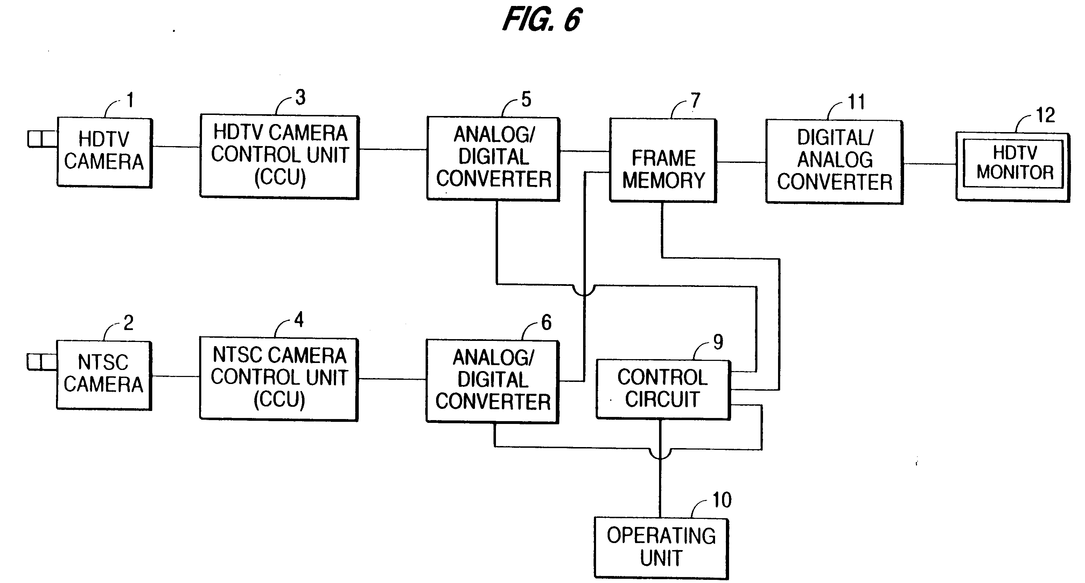

In the case where HDTV camera 1 and HDTV monitor 12 are connected by a line whose data transmission per unit time is limited (such as an ISDN line), a relatively long time is required for the transmission of one frame of data when the digital image data of the image formed by HDTV camera 1 is transmitted to a remote location. Accordingly, there is an undesireably long time elapse until one high resolution picture is reproduced on HDTV monitor 12. FIG. 6 is a block diagram of an imaging system according to an embodiment of the present invention and which compensates for this problem.

In FIG. 6, control circuit 9 is connected to, and controls, analog/digital converter 5, analog/digital converter 6 and frame memory 7. Control circuit 9 not only controls the writing of image data into frame memory 7, but also controls the output of image data from analog/digital converter 5 and analog/digital converter 6. For example, control circuit 9 stops the data output from analog/digital converter 5 when control circuit 9 is not performing control of the writing into frame memory 7 of digital image data from analog/digital converter 5. Similarly, control circuit 9 stops the data output from analog/digital converter 6 when control circuit 9 does not perform control of the digital image data from analog/digital converter 6.

In an imaging system as illustrated in FIG. 6, frame memory 7, digital/analog converter 11 and control circuit 9 are disposed on a receiver side of the imaging system. That is, frame memory 7, digital/analog converter 11 and control circuit 9 are disposed in a remote location. HDTV camera 1, analog/digital converter 5, NTSC camera 2 and analog/digital converter 6 are disposed on a transmitter side of the imaging system. Then, HDTV camera 1 and NTSC camera 2 produce images of the same specimen image. The amount of image data of the image formed by the NTSC camera 2 is smaller than the amount of image data of the image formed by HDTV camera 1. Accordingly, the transmission time of one frame of data is shorter for NTSC camera 2 as compared to the transmission of one frame of data for HDTV camera 1. Therefore, according to an embodiment of the present invention as illustrated in FIG. 6, control circuit 9 performs control to transmit the digital image data from analog/digital converter 6 to frame memory 7 (which is remote). At this time, control circuit 9 performs control to cause the image data from analog/digital converter 5 to stop being transmitted to frame memory 7. Accordingly, the image from HDTV camera 1 is not transmitted to the remote site.

The operator at the receiver side, at the remote location, observes the movement of the specimen image via the image formed by NTSC camera 2, whose transmission time is relatively short. Then, when a reproduced image makes it necessary to perform accurate observation, control circuit 9 causes one frame of data from analog/digital converter 5 to be transmitted to frame memory 7. As a result, the image formed by HDTV camera 1 is reproduced on HDTV monitor 12 on the remote receiver side. At this time, control circuit 9 performs control to cause the image formed by NTSC camera 2 to stop from being transmitted to the remote location. Accordingly, at this time, the image formed by NTSC camera 2 is not transmitted to the remote site.

In this manner, a necessary specimen image is sampled via the image formed by NTSC camera 2 and can be reproduced on a portion of a normal monitor television or on a portion of HDTV monitor 12. Then, when a specimen is reproduced which indicates that accurate judgment is necessary, the operation of operation unit 10 causes a high resolution specimen image to be reproduced on the entire image reproducing surface of HDTV monitor 12. It is then possible to perform a judgment based on the high definition image formed by HDTV camera 1.

In the above manner and according to an embodiment of the present invention as illustrated in FIG. 6, the image information of NTSC video signals, having a different format than HDTV format, can be reproduced on an HDTV monitor. Moreover, the image formed by HDTV camera 1 and the image formed by NTSC camera 2 can be observed by a single HDTV monitor 12.

Moreover, according to embodiments of the present invention, an external operation (such as the operation of operating unit 10 by a system user) can cause a stop of the writing of data from analog/digital converter 6, and a high resolution image of only that which is formed by HDTV camera 1 can be displayed on the whole surface of HDTV monitor 12. Further, according to embodiments of the present invention, the display location on the picture surface of HDTV monitor 12 of the image from NTSC camera 2 can be optionally selected. Accordingly, the image formed by NTSC camera 2 can be reproduced on portions of the stationary image formed by HDTV camera 1 other than on the most important portions.

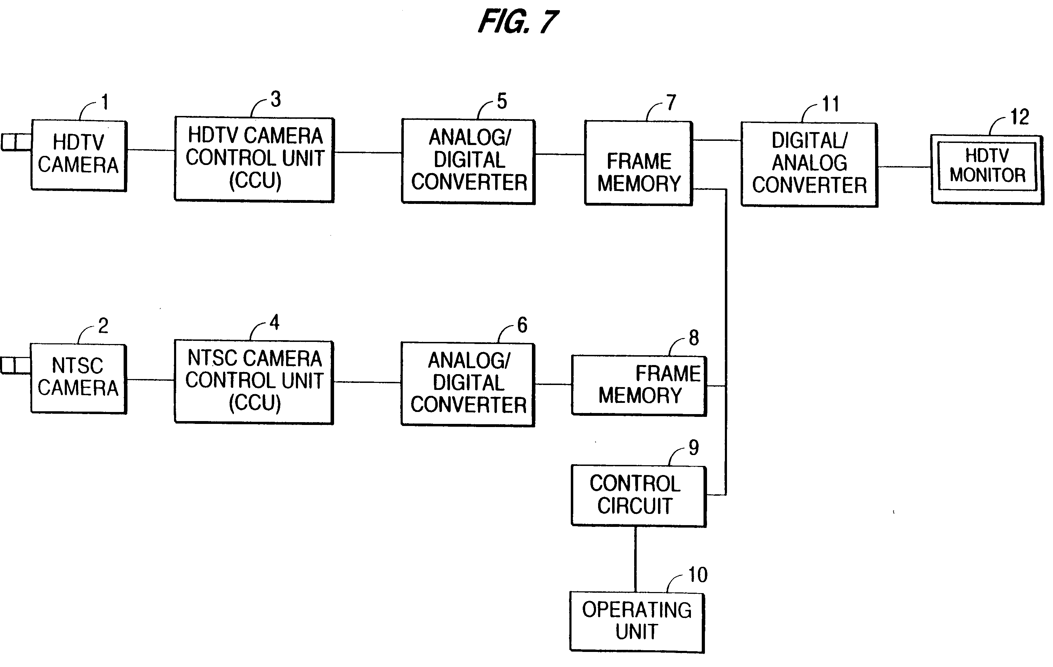

The above embodiments of the present invention relate to an image formed by an NTSC camera being displayed on an HDTV monitor. By combining the digital image data from an NTSC camera with the digital image data from an HDTV camera, the image from the NTSC camera is displayed on the HDTV monitor. For this purpose, the display of the image formed by the NTSC camera becomes small, and may become hard to see. This is because the number of pixels of the NTSC format is small as compared to the number of pixels of the HDTV format. This problem is solved by an imaging system as illustrated in FIG. 7, discussed below.

FIG. 7 is a block diagram of an imaging system according to an embodiment of the present invention. In FIG. 7, an analog video signal from HDTV camera 1 is sent to analog/digital converter 5 via HDTV camera control unit 3. Analog/digital converter 5 converts the analog video signal into digital image data, and sends the digital image data to frame memory 7. Frame memory 7 stores the digital image data. Similarly, the analog video signal from NTSC camera 2 is sent via NTSC camera control unit 4 to analog/digital converter 6. Analog/digital converter 6 converts the analog video signal into digital image data, and sends the digital image data to a frame memory 8. The digital image data from analog/digital converter 6 is temporarily stored in frame memory 8. The stored digital image data in frame memory 8 is transferred to frame memory 7 via the control of control circuit 9 and operating unit 10. Then, the digital image data stored in frame memory 7 is restored to an analog video signal by digital/analog converter 11. An image is displayed on HDTV monitor 12 in accordance with the analog video signal from digital/analog converter 11.

HDTV camera 1 is controlled by HDTV camera control unit 3 and produces an image of a suitable specimen. The analog video signal of the image is sent via HDTV camera control unit 3 to analog/digital converter 5. Analog/digital converter 5 converts this video signal into sequential digital image data and sends it to frame memory 7. Frame memory 7 is controlled by control circuit 9 to store one frame of the image data (namely, stationary image information) within the image data from analog/digital converter 5. Moreover, image data from frame memory 8 is stored in frame memory 7 by being superposed on a region of a portion of the sequential frame memory 7.

Similarly, NTSC camera 2 is controlled by NTSC camera control unit 4 and produces an image of a reference specimen related to the image formed by HDTV camera 1. This analog video signal is sent via NTSC camera control unit 4 to analog/digital converter 6. Analog/digital converter 6 converts the input analog video signal into sequential digital image data and sends the digital image data to frame memory 8. Frame memory 8 is controlled by control circuit 9 to successively take in, at predetermined intervals, one frame of image data from the digital image data produced by analog/digital converter 6. Therefore, the image information from NTSC camera 2 is stored and a suitable thinning out process is performed.

With respect to frame memory 7 and frame memory 8, control circuit 9 controls storage of image data from analog/digital converter 5 and analog/digital converter 6. Control circuit 9 also performs control of the movement of image data stored in frame memory 8 into the frame memory 7. Namely, with respect to NTSC frame memory 7 and for every frame of image data newly written in at a predetermined interval, control circuit 9 moves this video data to frame memory 7. Digital/analog converter 11 performs a digital/analog conversion process to read out image data from frame memory 7. Digital/analog converter 11 outputs an analog video signal to the HDTV monitor 12. Digital/analog converter 11 adds the analog video signal as a synchronous signal according to the timing of reading out data from frame memory 7.

After the image data of the image formed by HDTV camera 1 is stored in frame memory 7, the image can be reproduced on the picture surface of HDTV monitor 12. Moreover, the image data of the image formed by NTSC camera 2 is also written into frame memory 7 via frame memory 8. Accordingly, the image formed by NTSC camera 2 can also be reproduced on HDTV monitor 12. The image data from HDTV camera 1 is stored in frame memory 7 as stationary image information. Then, image data from frame memory 8 is sequentially written into specific regions of frame memory 7. Thereupon, image data from NTSC camera 2 can be reproduced as a window on the picture surface of HDTV monitor 12 with the image from HDTV camera 1 as a background. Then, the image from NTSC camera 2 can be caused to successively change.

However, an image of one frame is generally formed by 512 × 512 pixels in the NTSC format. In the HDTV format, an image of one frame is formed by 1,920 × 1,032 pixels. Here, one pixel of digital image data, stored in frame memory 8, is stored in the address of one pixel of frame memory 7. In this case, when data from frame memory 7 is read out via digital/analog converter 11 and displayed on HDTV monitor 12, the image formed by NTSC camera 2 is reproduced on a surface area of about one seventh of the picture surface of HDTV monitor 12.

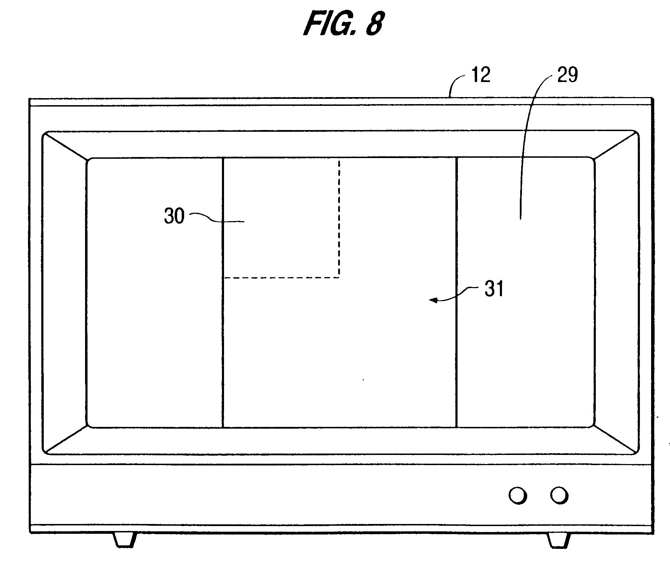

FIG. 8 is a diagram illustrating the display on a HDTV monitor 12 of the imaging system illustrated in FIG. 7, according to an embodiment of the present invention. In FIG. 8, an image formed by NTSC camera 2 is displayed on a region 30 of HDTV monitor 12. Region 30 is within a region 29 of the whole picture surface of HDTV monitor 12. As shown in FIG. 8, when the reference information of NTSC camera 7 is combined with the image information of HDTV camera 1, the image of the reference information becomes small. As a result, the details of the reference information become difficult to see.

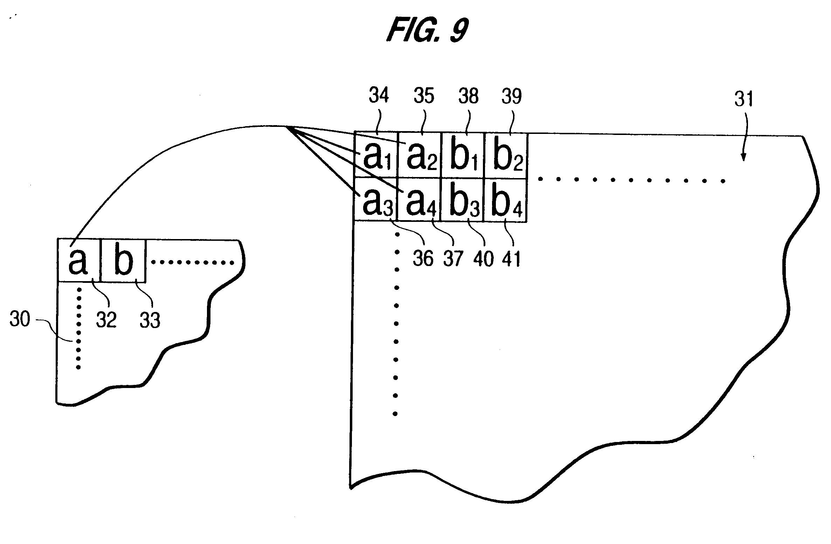

Accordingly, when the image data of the frame memory 8 is moved to the frame memory 7, one pixel of data is made able to be stored in plural address positions of frame memory 7 by operating the operating unit 10. By operating the operating unit 10, control circuit 9 performs the following control. Control circuit 9 moves the image data from frame memory 8 to frame memory 7. At this time, one pixel of image data read out from frame memory 8 is written into an address region of two pixels of HDTV frame memory 8. This operation will be described with reference to FIG. 9.

FIG. 9 is a diagram illustrating a process of writing images into a frame memory of an imaging system, according to an embodiment of the present invention. In FIG. 9, the data 32 of one pixel of the first line in an NTSC image 30 is written into a region on the same line of frame memory 7 containing data 34 of the first pixel and data 35 of the second pixel. That is, one pixel of NTSC image 30 is repetitively written into two places of address locations of frame memory 7. In this manner, after one line of image data in NTSC image 30 has been written into frame memory 7, image data of the same line is similarly written into a region which has a line address increased by one line of frame memory 7. As a result, as shown in FIG. 9, one pixel of data 32 in NTSC image 30 is also again stored as data 36 of a third pixel and data 37 of a fourth pixel in an HDTV image on HDTV monitor 12. Therefore, the data of one pixel in NTSC image 30 corresponds with four pixels of data in an HDTV image on HDTV monitor 12.

In this manner, control circuit 9 moves data from frame memory 8 to frame memory 7 so as to write in data of one pixel of the NTSC image, indicating the address positions of four places of frame memory 7. As a result, the image data can be reproduced in a large size on HDTV monitor 12, based on the digital image data of frame memory 8. As shown in FIG. 8, an NTSC image 30 can be reproduced on HDTV monitor 12 and enlarged to a range occupying 1,024 × 1,024 pixels in the 1,920 × 1,032 pixels of the HDTV image.

Therefore, according to embodiments of the present invention as illustrated in FIG. 9, HDTV monitor 12 includes a plurality of pixels for displaying images. Digital image data representing an image and stored in frame memory 8 includes a plurality of pixel data for displaying the image on the pixels of HDTV monitor 12. Each pixel data represents data for controlling one pixel of HDTV monitor 12. For each pixel data of the digital image data representing the image, the frame memory 7 stores the respective pixel data into multiple memory locations of frame memory 7, thereby allowing the respective pixel data to control multiple pixels of HDTV monitor 12.

According to embodiments of the present invention, an image of specific materials is usually displayed as a stationary image on HDTV monitor 12. Then, the NTSC image 30 (which represents reference information) is displayed on a portion of the HDTV image 29 (see FIG. 8). Therefore, an image from HDTV camera 1 and an image from NTSC camera 2 can be observed on the picture surface of a single monitor. When the details of NTSC image 30 are difficult to see, operating unit 10 can be operated to cause an enlargement of NTSC image 30 to be displayed on HDTV monitor 12. The details of NTSC image 30 can then be more clearly observed.

Furthermore, when it is desired to observe the whole image of the specific materials, the digital image data from analog/digital converter 5 is again caused to be written into frame memory 7. By this action, the image data from frame memory 8 stored in the frame memory 7 is erased, and only the digital image data of the specific materials is stored in frame memory 7. Accordingly, only the image of the specific materials can be displayed on HDTV monitor 12.

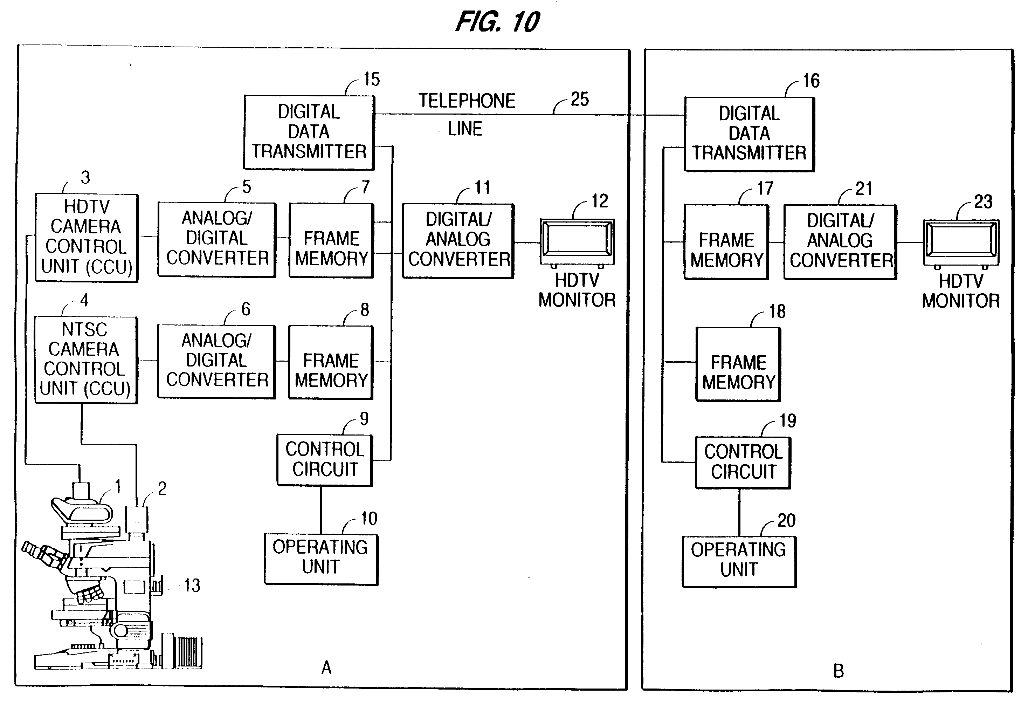

Embodiments of the present invention display images of HDTV camera 1 and NTSC camera 2 on a single monitor. By contrast, FIG. 10, discussed below, illustrates an embodiment of the present invention in which the same image can be viewed by separate remote monitors.

As illustrated in FIG. 10, a digital data transmitter 15 is added to the imaging system illustrated in FIG. 7. Control circuit 9 performs control to move image data of frame memory 8 to frame memory 7. Then, control circuit 9 performs control to send digital image data stored in frame memory 8 and digital image data stored in frame memory 7 to a digital data transmitter 15 of an image input-output device A.

Digital data transmitter 15 is connected, via a telephone line 25 (which is, for example, an ISDN or a digital public line), to a digital data transmitter 16 on the side of an auxiliary device B. Digital data transmitter 16 of auxiliary device B is the same type of digital data transmitter as digital data transmitter 15. Furthermore, auxiliary device B has a frame memory 17, a frame memory 18, a control circuit 19, an operating unit 20, a digital/analog converter 21, and an HDTV monitor 23 which function the same as frame memory 7, frame memory 8, control circuit 9, operating unit 10, digital/analog converter 11 and HDTV monitor 12, respectively, of the image input-output device A.

In an embodiment of the present invention as illustrated in FIG. 10, the digital image data of frame memory 7 is sent to frame memory 17 via digital data transmitter 15 and digital data transmitter 16, and is stored in frame memory 7. Similarly, the digital image data of frame memory 8 is send to frame memory 18 via digital data transmitter 15 and digital data transmitter 16, and is stored in frame memory 18.

To describe in further detail, the image signal of the specimen image of, for example, a microscope 13 is imaged by HDTV camera 1, and converted into digital image data by analog/digital converter 5. One frame of image data in this digital image data is written into frame memory 7. In addition, this digital image data is sent by digital data transmitter 15 via telephone line 25 to auxiliary device B. The digital image data is then written into frame memory 17 of auxiliary device B. The image data of the reference information imaged by NTSC camera 2 is sequentially written into frame memory 8. Each of the image data written into frame memory 8 is written into frame memory 7. Furthermore, the image data written into frame memory 7 is sent via digital data transmitter 15 to auxiliary device B. Then, the same image information as written into frame memory 8 is also written into frame memory 18 of auxiliary device B.

Data processing similar to the data processing in image input-output device A is then performed in auxiliary device B. By operating the operating unit 20, the control circuit 19 performs control to move image data of frame memory 18 to frame memory 17. An image based on the image data of frame memory 18 is then displayed on HDTV monitor 23.

Telephone line 25 has a limited data transmission capacity per unit of time. Therefore, according to the embodiment of the present invention as illustrated in FIG. 10, telephone line 25 can be effectively utilized so that the reference information imaged by NTSC camera 2 is rapidly transmitted to the remote auxiliary device B and, even if the imaging system is sequentially changing reference information, it becomes possible to observe the reference information on HDTV monitor 23 of auxiliary device B.

When image input-output device A and auxiliary device B are combined, operating unit 10 and control circuit 9 (which are included in image input-output device A), and operating unit 20 and the control circuit 19 (which are included in auxiliary device B) are the same article. Then, operating unit 10 of image input-output device A is operated to perform control such that the image data of frame memory 8 is written into plural places of frame memory 7. The control signal transmitted from operating unit 10 to control circuit 9 at this time is also input to control circuit 19 of auxiliary device B via digital data transmitter 15. In this manner, the writing of the image data from frame memory 18 of auxiliary device B into frame memory 17 is controlled, thereby changing over according to the operating control of writing in image input-output device A.

Via operating unit 20 of auxiliary device B, a changeover is similarly performed when writing in from frame memory 18 to frame memory 17. At this time, a control signal is transmitted from operating unit 20 to control unit 19, but is also input to control circuit 9 of image input-output device A via digital data transmitter 16. Furthermore, by omitting the operating unit of either auxiliary device B or image input-output device A, the whole operation may be performed via an operating unit disposed in image input-output device A or in auxiliary device B.

In conventional systems, when image data is sent to a distant place using a digital public line whose data transmission capacity per unit time is limited, a long time is required to transmit one frame of high resolution image data. As a result, the image formed by HDTV camera 1 may be good enough to use for making an accurate judgment, however, it takes a long time until the image is displayed on the monitor picture surface. Also, in conventional systems, when the transmission time is shortened by reducing the amount of data, the quality of the image becomes poor. Moreover, in conventional systems, the image formed by NTSC camera 2 is insufficient for performing accurate judgment.

According to embodiments of the present invention, the image data of frame memory 8, whose amount of information per frame is small, can be sequentially transmitted from digital data transmitter 15 to digital data transmitter 16 and then to frame memory 18. Then, the image data can be displayed on HDTV monitor 23 by moving the image data of frame memory 18 to frame memory 17 by control of control circuit 19. Furthermore, when necessary, an enlarged NTSC image 31, as shown in FIG. 8, can be displayed on HDTV monitor 23. Moreover, the image data of frame memory 7 can also be transmitted to frame memory 17 and displayed as a high resolution image on HDTV monitor 23 in accordance with an external operation.

Accordingly, for example, the image data of a specimen image formed by HDTV camera 1, whose amount of data is large, is stored in frame memory 7, and the image data of a specimen image formed by NTSC camera 2, whose amount of data is small. is stored in frame memory 8. By telephone line 25, the usual digital image data of frame memory 8 is transmitted to frame memory 18. The image data of frame memory 18 is then moved to frame memory 17, and is displayed on HDTV monitor 23. An operator viewing HDTV monitor 23 performs indexing of the necessary image by the reference information changing in the manner of a standard moving image If it is necessary to observe details of the image, an NTSC image can be enlarged four times and displayed on HDTV monitor 23 when moving the image of frame memory 18 to frame memory 17 and writing the same image data into the address locations of four places of frame memory 17.

In the above manner, indexing of important images via images of reference information can be performed by transmitting the image data of frame memory 7 to frame memory 17 when important images are reproduced. As a result, a high clarity image is reproduced on HDTV monitor 23, and an accurate judgment can be performed.

Moreover, according to embodiments of the present invention, effective indexing and accurate judgment can both be performed even though specific information or reference information is transmitted to a remote distance using a telephone line or public line having a limited transmission capacity per unit time. According to embodiments of the present invention, the public line is effectively used, and accurate judgment or diagnosis by a specialist can be performed with respect to the specimen image at an optional, geographically remote location.

Further, a control switch is used when image data is moved by operating unit 20 of auxiliary device B from frame memory 18 to frame memory 17. However, a remote operating switch of microscope 13 can be arranged in operating unit 20, or elsewhere. When this remote operating switch is operated, a predetermined control code is sent from control circuit 19 via digital data transmitter 16 to control circuit 9 of image input-output device A. Remote operation of microscope 13 may then be performed via control circuit 9 of image input-output device A.

According to embodiments of the present invention, analog video signals from an HDTV camera are in a different format than analog video signals from an NTSC camera. However, the analog video signals from the HDTV camera and the analog video signals from the NTSC camera are converted into digital image data representing pixels, where the digital image data of the analog video signals from the HDTV camera is in a common format as digital image data of the analog video signals from the NTSC camera. This commonly formatted digital image data can then be stored in the same frame memory.

According to embodiments of the present invention, digital image data from a first analog/digital converter is conserved in a frame memory. Digital image data from a second analog/digital converter may be stored in specific regions of this frame memory. In this manner, digital image data from the second analog/digital converter can be successively accumulated and written in memory regions of a portion of the frame memory. The image data conserved in the frame memory is converted into an analog video signal by a digital/analog converter. Moreover, an HDTV monitor image is displayed via this video signal. The image information of an NTSC camera is included in the image information of the HDTV camera, and the image information of the NTSC camera can be reproduced in a portion of the picture surface of the HDTV monitor.

Moreover, according to embodiments of the present invention, a control circuit can perform the writing in of the image data from the first analog/digital converter into the frame memory, and the writing in of the image data from the second analog/digital converter into the frame memory, according to operations from the exterior. In this case, control is possible to make the image data stored in the frame memory be only image data from the first analog/digital converter. Moreover, control is possible to make the image data sequentially repetitively accumulated and written into the frame memory be only image data from the second analog/digital converter.

In addition, according to embodiments of the present invention, a control circuit can specify the location of the specific memory regions according to operations from the exterior. In this case, the operation can be an operation to optionally set the location in which the digital image data from the second analog/digital converter is written into the frame memory. Moreover, when the NTSC frame memory stores digital image data from the second analog/digital converter, a control circuit can move the digital image data stored in the NTSC frame memory into the HDTV memory. Then, the control circuit, when it moves the digital image data stored in the NTSC frame memory into the HDTV frame memory, can write one data pixel of the digital image data stored in the NTSC frame memory into plural address locations of the HDTV frame memory. As a result, the image formed by the NTSC camera can be reproduced and enlarged on the picture surface of the HDTV monitor.

According to embodiments of the present invention, an imaging apparatus includes an HDTV camera and a NTSC camera which input images; a first analog/digital converter which converts the analog image signals from the HDTV camera into digital image data; a second analog/digital converter which converts the analog image signals from the NTSC camera into digital image data; an HDTV frame memory which stores the digital image data from the first analog/digital converter; a digital/analog converter which converts the digital image data stored in the HDTV frame memory into analog video signals; an HDTV monitor which uses the analog video signals to display images; a NTSC frame memory which stores the digital image data from the second analog/digital converter; and a control circuit which moves the digital image data stored in the NTSC frame memory into the HDTV frame memory. When the control circuit moves the digital image data stored in the NTSC frame memory into the HDTV frame memory, the control circuit writes in one pixel data of the digital image data stored in the NTSC frame memory into plural address locations of the HDTV frame memory.

Although the above embodiments of the present invention are described as related to images formed by an HDTV camera and images formed by an NTSC camera, the present invention is not limited to HDTV formatted images and NTSC formatted images. Thus, the present invention applies to images in virtually any format.

Although a few preferred embodiments of the present invention have been shown and described, it would be appreciated by those skilled in the art that changes may be made in these embodiments without departing from the principles and spirit of the invention, the scope of which is defined in the claims and their equivalents.

## Claims

1. An imaging apparatus which displays a first image formed in a first analog format and converted to digital image data representing the first image and a second image formed in a second analog format and converted to digital image data representing the second image, the first analog format being a different analog format than the second analog format, the apparatus comprising:
a frame memory storing the digital image data representing the first image and the digital image data representing the second image; and
a display device having a display surface and using the digital image data representing the first image and the digital image data representing the second image stored in the frame memory to simultaneously display the first image and the second image on the display surface.

2. An imaging apparatus as in claim 1, wherein the frame memory has specific memory locations, the frame memory writing the digital image data representing the first image into the specific memory locations of the frame memory, and writing the digital image data representing the second image in a selected portion of the specific memory locations of the frame memory.

3. An imaging apparatus as in claim 2, further comprising:
a first camera which produces analog image signals corresponding to the first image in the first analog format;
a first analog/digital converter which converts the analog image signals of the first camera into the digital image data representing the first image, the digital image data representing the first image being stored in the specific memory locations of the frame memory;
a second camera which produces analog image signals corresponding to the second image in the second analog format;
a second analog/digital converter which converts the analog image signals of the second camera into the digital image data representing the second image, the digital image data representing the second image being stored in the portion of the specific memory locations of the frame memory; and
a digital/analog converter which converts the digital image data representing the first image and the digital image data representing the second image stored in the frame memory into analog video signals, wherein the display device is a monitor which uses the analog video signals of the digital/analog converter to display the first image and the second image on the monitor.

4. An imaging apparatus as in claim 2, further comprising:
a control circuit which is selectively controllable to be in one of a first state and a second state, the control circuit causing the digital image data representing the first image to be stored in the frame memory when the control circuit is in the first state, and causing the digital image data representing the second image to be stored in the frame memory when the control circuit is in the second state.

5. An imaging apparatus as in claim 3, further comprising:
a control circuit which is selectively controllable to be in one of a first state and a second state, the control circuit causing the digital image data representing the first image to be stored in the frame memory when the control circuit is in the first state, and causing the digital image data representing the second image to be stored in the frame memory when the control circuit is in the second state.

6. An image apparatus as in claim 4, wherein the control circuit is controllable to specify the portion of the specific memory locations of the frame memory in which the digital image data representing the second image is stored.

7. An imaging apparatus as in claim 5, wherein the control circuit is controllable to specify the portion of the specific memory locations of the frame memory in which the digital image data representing the second image is stored.

8. An imaging apparatus as in claim 2, wherein the display device includes a plurality of pixels for displaying images, the digital image data representing the second image includes a plurality of pixel data for displaying the second image on the pixels of the display device, each pixel data representing data for controlling one pixel of the display device and, for each pixel data of the digital image data representing the second image, the frame memory repetitively stores the respective pixel data into multiple memory locations of the frame memory, thereby allowing the respective pixel data to control multiple pixels of the display device.

9. An imaging apparatus as in claim 3, wherein the first camera is an HDTV camera which produces analog image signals corresponding to the first image in an HDTV format, and the second camera is an NTSC camera which produces analog image signals corresponding to the second image in an NTSC format.

10. An imaging apparatus which displays a first image and a second image, the apparatus comprising:
an HDTV camera which produces analog image signals corresponding to the first image in an HDTV format;
a first analog/digital converter which converts the analog image signals of the HDTV camera into digital image data representing the first image;
an NTSC camera which produces analog image signals corresponding to the second image in an NTSC format;
a second analog/digital converter which converts the analog image signals of the NTSC camera into digital image data representing the second image;
a frame memory having specific memory locations, the frame memory
storing the digital image data representing the first image in the specific memory locations, and
storing the digital image data representing the second image in a selected portion of the specific memory locations;
a digital/analog converter which converts the digital image data representing the first image and the digital image data representing the second image stored in the frame memory into analog video signals; and
a display device having a display surface and using the analog video signals of the digital/analog converter to simultaneously display the first image and the second image on the display surface.

11. An imaging apparatus which displays a first image formed in a first analog format and converted to digital image data representing the first image and a second image formed in a second analog format and converted to digital image data representing the second image, the first analog format being a different analog format than the second analog format, the apparatus comprising:
a first frame memory storing the digital image data representing the first image;
a second frame memory storing the digital image data representing the second image; and
a display device having a display surface and using the digital image data stored in the first frame memory and the digital image data stored in the second frame memory to simultaneously display the first image and the second image on the display surface.

12. An imaging apparatus as in claim 11, further comprising:
a first camera which produces analog image signals corresponding to the first image in the first analog format;
a first analog/digital converter which converts the analog image signals of the first camera into the digital image data representing the first image, the digital image data of the first analog/digital converter being stored in the first frame memory;
a second camera which produces analog image signals corresponding to the second image in the second analog format;
a second analog/digital converter which converts the analog image signals of the second camera into the digital image data representing the second image, the digital image data of the second analog/digital converter being stored in the second frame memory;
a control circuit which transfers the digital image data representing the second image stored in the second frame memory into the first frame memory; and
a digital/analog converter which converts the digital image data representing the first image and the digital image data representing the second image stored in the first frame memory into analog video signals, wherein the display device is a monitor which uses the analog video signals of the digital/analog converter to display the first image and the second image on the monitor.

13. An imaging apparatus as in claim 12, wherein the display device includes a plurality of pixels for displaying images, the digital image data representing the second image includes a plurality of pixel data for displaying the second image on the pixels of the display device, each pixel data representing data for controlling one pixel of the display device and, for each pixel data of the digital image data representing the second image, the control circuit repetitively transfers the respective pixel data from the second frame memory into multiple memory locations of the second frame memory, thereby allowing the respective pixel data to control multiple pixels of the display device.

14. An imaging apparatus as in claim 12, wherein the control circuit is selectively controllable to cause the digital image data representing the second image and stored in the second frame memory to be transferred to the first frame memory.

15. An imaging apparatus as in claim 12, wherein the first frame memory has specific memory locations, the first frame memory storing the digital image data representing the first image into the specific memory locations of the frame memory and, when transferred by the control circuit, the digital image data representing the second image is stored in a selected portion of the specific memory locations of the first frame memory.

16. An image apparatus as in claim 15, wherein the control circuit is controllable to specify the portion of the specific memory locations of the first frame memory in which the digital image data representing the second image is stored.

17. An image apparatus as in claim 12, further comprising a digital data transmitter which transmits digital image data representing the first image stored in the first frame memory over a communication line to a remote location.

18. An image apparatus as in claim 17, wherein the digital data transmitter transmits digital image data representing the second image stored in the second frame memory over the communication line to the remote location.

19. An image apparatus as in claim 17, wherein the digital data transmitter transmits digital image data representing the second image stored in the first frame memory over the communication line to the remote location.

20. An imaging apparatus as in claim 12, wherein the first camera is an HDTV camera which produces analog image signals corresponding to the first image in an HDTV format, and the second camera is an NTSC camera which produces analog image signals corresponding to the second image in an NTSC format.

21. An imaging apparatus which displays a first image and a second image, the apparatus comprising:
a first camera which produces analog image signals corresponding to the first image in a first format;
a first analog/digital converter which converts the analog image signals of the first camera into digital image data representing the first image;
a second camera which produces analog image signals corresponding to the second image in a second format;
a second analog/digital converter which converts the analog image signals of the second camera into digital image data representing the second image;
a control circuit which is selectively operable to be in one of a first state and a second state;
a frame memory which stores the digital image data representing the first image when the control circuit is in the first state, and stores the digital image data representing the second image when the control unit is in the second state;
a digital/analog converter which converts the digital image data stored in the frame memory into analog video signals; and
a display device using the analog video signals of the digital/analog converter to display one of the first image and the second image in accordance with the analog video signals of the digital/analog converter.

22. An imaging apparatus as in claim 21, wherein the first camera is an HDTV camera which produces analog image signals corresponding to the first image in an HDTV format, and the second camera is an NTSC camera which produces analog image signals corresponding to the second image in an NTSC format.

23. An imaging apparatus which displays a first image represented by digital image data and a second image represented by digital image data, the apparatus comprising:
a frame memory storing the digital image data representing the first image and the digital image data representing the second image; and
a display device having a display surface formed by pixels, wherein the digital image data representing the first image includes data for displaying the first image on a number of pixels of the display device, and the digital data representing the second image includes data for displaying the second image on a number of pixel of the display device which is different than the number of pixels for displaying the first image, the display device using the digital image data representing the first image and the digital image data representing the second image stored in the frame memory to simultaneously display the first image and the second image and the display surface.

24. Image display apparatus capable of displaying images originating from signals of different formats on a common display screen, comprising digital storage means for storing digital data representing first and second images received in one or more predetermined signal formats, and means for generating a display signal for display on the common display screen, based on the stored data for at least one of the first and second images.
